# EUROPÄISCHE PATENTSCHRIFT

(11) **EP 0 759 142 B1**
(45) Veröffentlichungstag und Bekanntmachung des Hinweises auf die Patenterteilung: **04.02.1998**
(21) Anmeldenummer: 95920803.4
(22) Anmeldetag: 05.05.1995
(51) Int. Cl.: F28F 25/08

(54) **MODULARER WÄRMETAUSCHER**
MODULAR HEAT EXCHANGER
ECHANGEUR DE CHALEUR MODULAIRE

(30) Priorität: 06.05.1994 IT MI940885
(43) Veröffentlichungstag der Anmeldung: 26.02.1997
(73) Patentinhaber: Neri, Bruno, 20133 Mailand (IT)
(72) Erfinder: Neri, Bruno, 20133 Mailand (IT)
(74) Vertreter: Jaeger, Klaus, Dr.
(86) Internationale Anmeldenummer: EP9501715
(87) Internationale Veröffentlichungsnummer: WO9530868

(56) Entgegenhaltungen:
- DE-A- 3 433 268
- US-A- 4 728 468

## Beschreibung

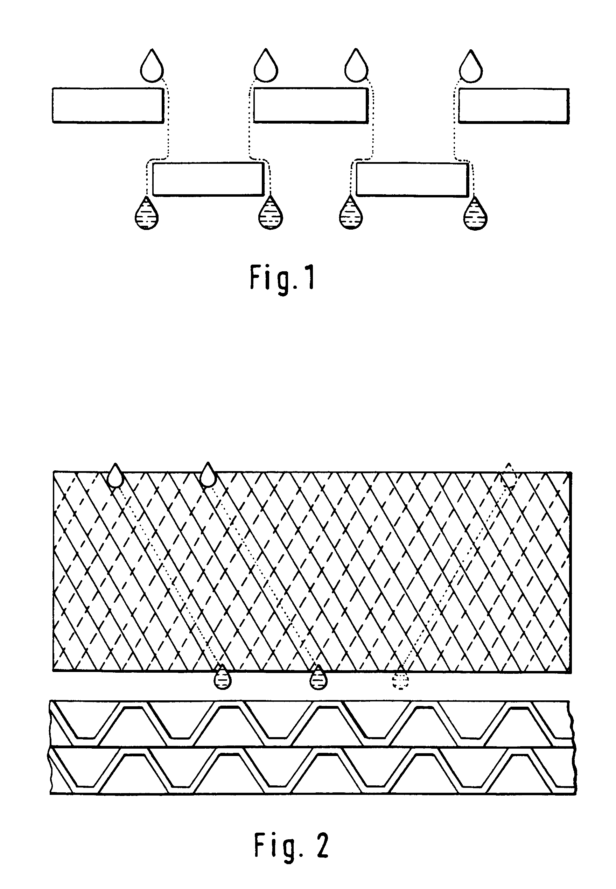

Gegenwärtig gibt es zwei Arten von Wärmetauschern.
a) Nach dem in Figur 1 gezeigten "splash" - Verfahren sind Gitterroste oder dergleichen vorgesehen, die das Zerteilen der Wassertropfen während des Falls durch den Verdunstungsturm ermöglichen. Das so zerteilte Wasser trifft auf einen Luftstrom, und infolge der Zwangsverdunstung des Wassers erfolgt seine Kühlung.
b) Nach dem in Figur 2 gezeigten "film" - Verfahren sind unterschiedlich geformte und miteinander verklebte Kunststoffplatten vorgesehen. Während des Falls benetzt das Wasser die Platten und bildet einen "film" aus. Der den Wasser-"film" bestreichende Luftstrom bewirkt die zwangsweise Verdunstung des Wassers und damit seine Abkühlung.

Das "film"-Verfahren hat den Nachteil, daß es während des Transports den vollen Raum beansprucht, das "splash"-Verfahren hat den Nachteil, daß für seine Installation am Einsatzort Arbeitskraft eingesetzt werden muß.

Überdies ist das "splash"-Verfahren wenig wirkungsvoll, und beim "film"-Verfahren tritt auch durch kleine Fremdkörper leicht eine Verstopfung ein.

Aus der US-A-4 728 468 ist ein modulares Wärmetauschelement bekannt, welches aus einem Rahmen, Stegen und Rippen zusammengesetzt ist und mit anderen Wärmetauschelementen koppelbar und/oder übereinander schichtbar ist. Die Rippen dieses bekannten Wärmetauschelementes sind allerdings gleichförmig starr angeordnet.

Auch aus der DE-A-3433268 ist ein modulares Wärmetauschelement mit einem Rahmen, Stegen und Rippen bekannt, welches mit anderen Wärmetauschelementen koppelbar und/oder übereinander schichtbar ist. Die Rippen dieses bekannten Wärmetauschelementes sind allerdings gleichförmig starr angeordnet.

Die Erfindung stellt die Aufgabe, die Nachteile der bekannten Verfahren zu beseitigen, d.h. den Wärmetauscher zweckmäßiger und wirtschaftlicher zu machen.

Das neue Wärmetauschelement wird nun anhand der Zeichnung beschrieben. Es zeigen:

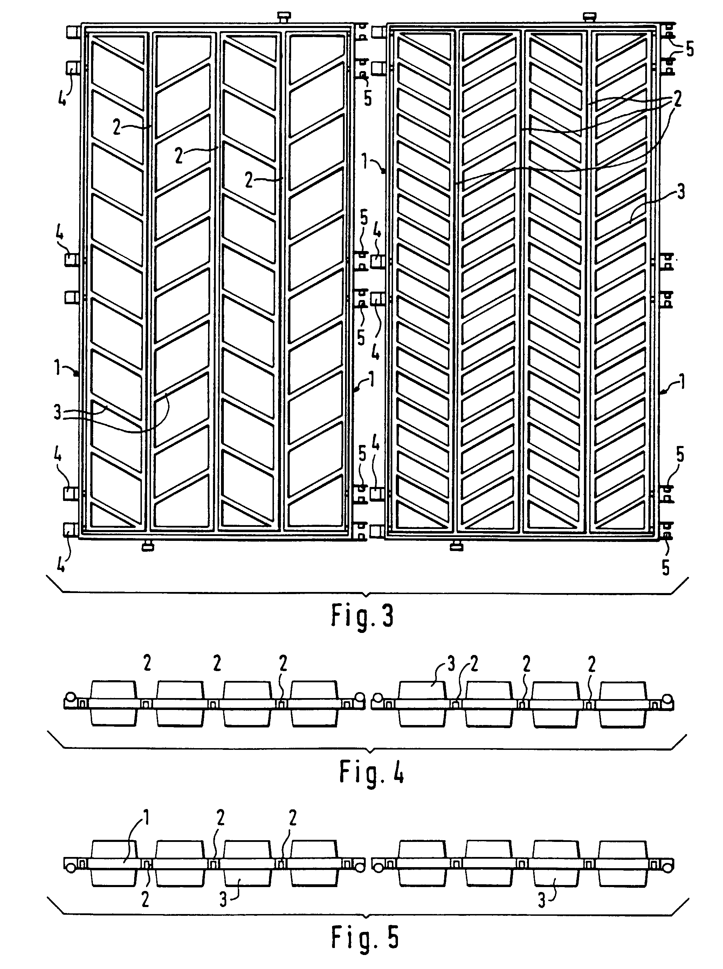

- Figur 3 zwei nebeneinander angeordnete Wärmetauschelemente,
- Figur 4 die beiden Wärmetauschelemente von oben gesehen,
- Figur 5 die beiden Wärmetauschelemente von unten gesehen,
- Figur 6 zwei Reihen von miteinander verbundenen Wärmetauschelementen von der Seite gesehen,
- Figur 7 die beiden wie in Figur 6 angeordneten Reihen, aber in einer anderen Winkelstellung und
- Figur 8 verschiedene AnordnungsmÖglichkeiten der Wärmetauschelemente im Inneren eines FlÜssigkeitskühlers.

Das einzelne Wärmetauschelement besteht aus einem äußeren Rahmen 1 und innenliegenden Stegen 2.

Zwischen dem äußeren Rahmen 1 und den einzelnen innenliegenden Stegen 2 sind Rippen 3 angeordnet, die unterschiedliche Lagen und Neigungen haben können. Am äußeren Rahmen 1 befinden sich vorstehende Zapfen 4 und aufnehmende Zapfen 5, die die Kopplung zwischen den einzelnen Wärmetauschelementen ermöglichen.

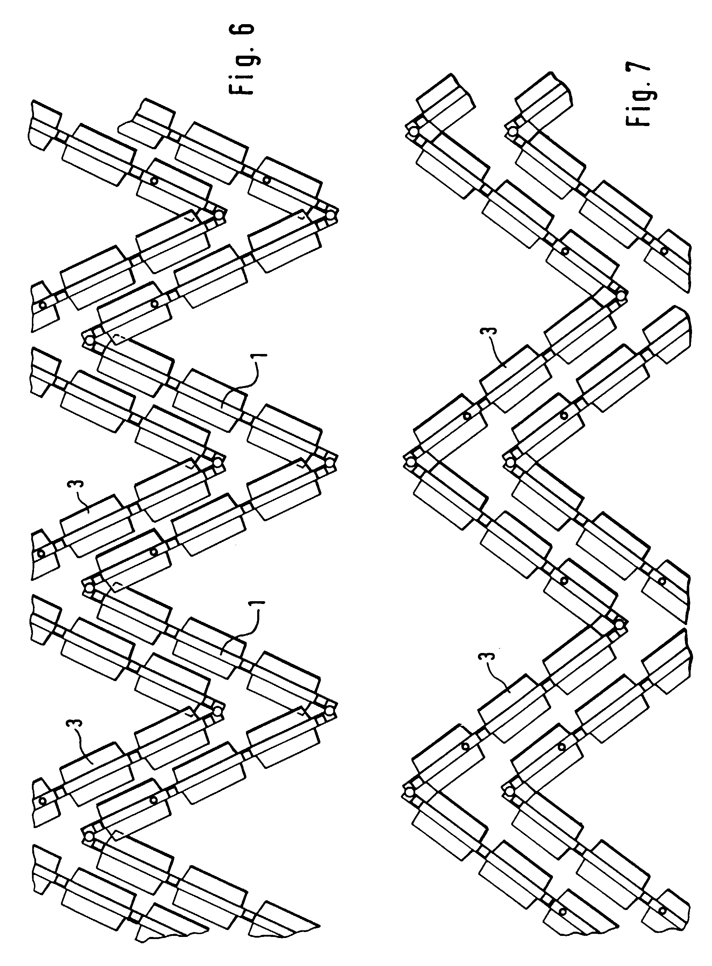

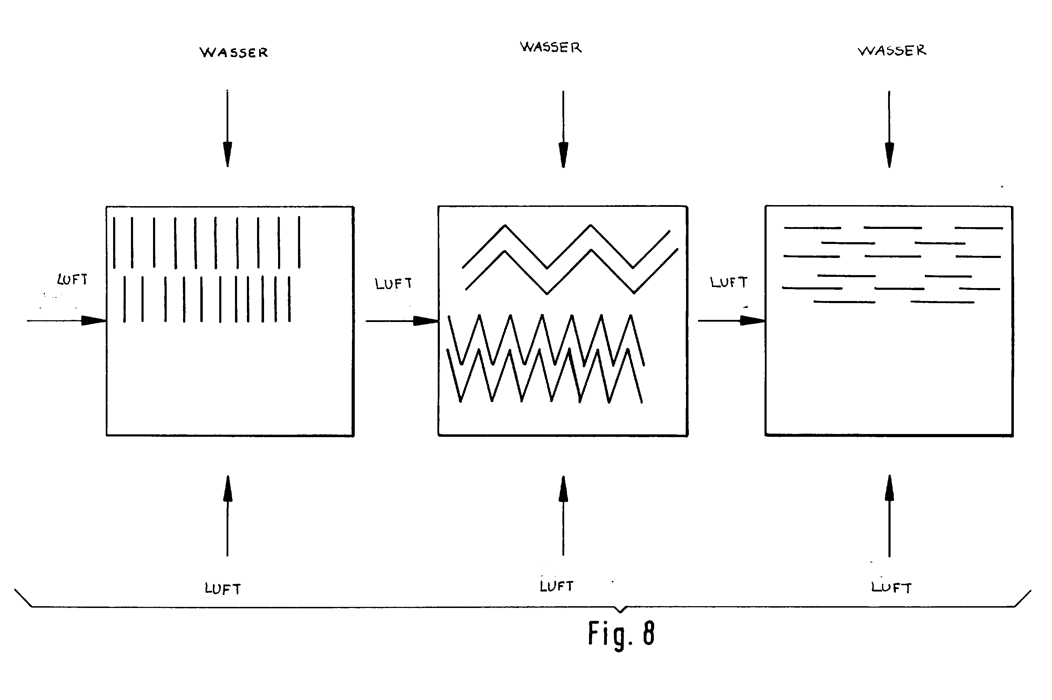

Nach den Figuren 6 und 7 können durch das Verkoppeln der einzelnen Wärmetauschelemente Stellungen mit unterschiedlichen Winkeln erhalten werden. Überdies macht die Möglichkeit der Ausrichtung der Rippen 3 das Erzeugnis an unterschiedlich geforderte Leistungen anpaßbar.

In Figur 8 sind schematisch verschiedene Stellungen der miteinander gekoppelten und/oder übereinandergelagerten Wärmetauschelemente im Inneren eines Flüssigkeitskühlers dargestellt.

Die geometrische Form der Kontaktoberfläche und die Leichtigkeit der Unterbringung machen die Leistung durch nahezu unendlich viele Stellungen veränderlich und erleichtern die Wartung.

Da das Material aus einem einzigen Modulelement zusammengesetzt ist, ist die Herstellung und Lagerung eines einzigen, der jeweils geforderten Leistung anpaßbaren Erzeugnisses möglich. Außerdem ermöglicht das erfindungsgemäße Wärmetauschelement einen Raumbedarf während des Transports und der Lagerung von günstigstenfalls nur 15% des Raumbedarfs nach der Installation. Der erfindungsgemäße, als Modulelement ausgebildete Wärmetauscher kann in einem einzigen Warmbehandlungsvorgang geformt werden.

## Patentansprüche

1. Modulares Wärmetauschelement, welches aus einem Rahmen (1), Stegen (2) und Rippen (3) zusammengesetzt ist und mit anderen Wärmetauschelementen koppelbar und/oder übereinander schichtbar ist, dadurch gekennzeichnet, daß die Rippen (3) ausrichtbar und verschieden einstellbar sind.

2. Wärmetauschelement nach Anspruch 1, dadurch gekennzeichnet, daß an dem äußeren Rahmen (1) vorstehende Zapfen (4) und aufnehmende Zapfen (5) zum gegenseitigen Koppeln der einzelnen Wärmetauschelemente angebracht sind.

3. Wärmetauschelement nach Anspruch 1, dadurch gekennzeichnet, daß das Modulelement in einem einzigen Warmbehandlungsvorgang formbar ist.

## Claims

1. A modular heat-exchange element, assembled from a frame (1), webs (2) and ribs (3), and adapted to be coupled to other heat-exchange elements and/or stackable one above the other, characterised in that the ribs (3) are alignable and differently adjustable.

2. A heat-exchange element according to claim 1, characterised in that projecting studs (4) and receiving studs (5) are provided on the outer frame (1) for coupling the individual heat-exchange elements together.

3. A heat-exchange element according to claim 1, characterised in that the modular element can be formed in a single heat-treatment operation.

## Revendications

1. Elément échangeur de chaleur modulaire, qui se compose d'un cadre (1), de traverses (2) et de nervures (3) et qui peut être couplé et/ou superposé à d'autres éléments échangeurs de chaleur, caractérisé en ce que, les nervures (3) peuvent être orientées et installées de diverses manières.

2. Elément échangeur de chaleur selon la revendication 1, caractérisé en ce que des tenons (4) en saillie et des mortaises réceptrices (5) au niveau du cadre extérieur (1) sont prévus pour coupler mutuellement les éléments échangeurs de chaleur individuels.

3. Elément échangeur de chaleur selon la revendication 1, caractérisé en ce que l'élément modulaire peut être façonné en une seule opération de transformation à chaud.
